# EUROPÄISCHE PATENTANMELDUNG

(11) **EP 1 355 507 A1**
(43) Veröffentlichungstag der Anmeldung: **22.10.2003**
(21) Anmeldenummer: 02008833.2
(22) Anmeldetag: 19.04.2002
(51) Int. Cl.: H04Q 11/04, H04Q 3/00, H04L 29/06, H04L 12/56

(54) **Verfahren zur Abbildung einer Eigenschaft einer permanenten Verbindung von einem verbindungsorientierten auf ein paketvermittelndes Telekommunikationsnetz**

(71) Anmelder: SIEMENS AKTIENGESELLSCHAFT, 80333 München (DE)
(72) Erfinder: Stehlik, Günther, 1100 Wien (AT)
(74) Vertreter: Berg, Peter, Dipl.-Ing.

(57) **Zusammenfassung**

Es wird ein Verfahren und eine Anordnung zur Abbildung einer Eigenschaft einer ersten Teilstrecke TS1 einer permanenten Verbindung in einem verbindungsorientierten Telekommunikationsnetz TN1 auf eine zweite Teilstrecke TS2 dieser Verbindung in einem paketvermittelnden Telekommunikationsnetz TN2 angegeben, wobei im paketvermittelnden Telekommunikationsnetz TN2 für die zweite Teilstrecke TS2 mit Hilfe des Multi Protocol Label Switching erfindungsgemäß ein Label Switched Path Tunnel erzeugt und entsprechend der Eigenschaft der ersten Teilstrecke TS1 parametriert wird. An der Schnittstelle der beiden Telekommunikationsnetze TN1 und TN2 werden die beiden Teilstrecken TS1 und TS2 in Folge zusammengeschaltet.

## Beschreibung

Die Erfindung betrifft ein Verfahren zur Abbildung einer Eigenschaft, welche eine erste Teilstrecke einer permanenten Verbindung betrifft, auf eine zweite Teilstrecke dieser Verbindung, wobei die erste Teilstrecke über ein verbindungsorientiertes Telekommunikationsnetz und die zweite Teilstrecke über ein paketvermittelndes Telekommunikationsnetz geführt wird. Weiterhin betrifft die Erfindung eine Anordnung zur Durchführung des genannten Verfahrens.

Im Zuge der Konvergenz zwischen klassischen, also verbindungsorientierten Telekommunikationsnetzen und paketvermittelten Telekommunikationsnetzen treten häufig Probleme bei der Abbildung von Eigenschaften oder Diensten von einem Netz auf das andere auf.

Eines dieser Probleme ist die Abbildung einer Eigenschaft einer permanente Verbindung von einem verbindungsorientierten auf ein paketvermittelndes Telekommunikationsnetz. Aufgrund der unterschiedlichen Technologien und Vermittlungsverfahren ergeben sich hier nämlich erhebliche Unterschiede.

In einem verbindungsorientierten Telekommunikationsnetz besteht die Möglichkeit, eine permanente Verbindung, eine sogenannte "Nailed up connection", zwischen zwei Teilnehmern oder anderen Endpunkten im Telekommunikationsnetz zu schalten. Diese Verbindung steht diesen beiden Teilnehmern in Folge exklusiv zur Verfügung. Anders als bei temporären Verbindungen, werden hier die Teilstücke der Verbindung zwischen den einzelnen Vermittlungsknoten nämlich nicht wieder für andere Teilnehmer freigegeben, sondern bleiben dauerhaft geschaltet, auch wenn diese nicht aktiv benutzt werden.

Aufgrund dieser speziellen Gegebenheiten folgen einige Besonderheiten für eine permanente Verbindung. Beispielsweise ergeben sich hier implizit verschiedene Eigenschaften, wie etwa eine permanente Verfügbarkeit und eine konstante Übertragungsbandbreite unabhängig vom Verkehrsaufkommen im Telekommunikationsnetz, sowie Vorteile hinsichtlich der Sicherheit. Diese Eigenschaften sind auch unter den Begriffen "Quality of Service", kurz QoS, "security" und "privacy" bekannt.

Aufgrund der technologischen Unterschiede zwischen verbindungsorientierten Telekommunikationsnetzen und paketvermittelnden Telekommunikationsnetzen, insbesondere aufgrund des Umstandes, dass in einem paketvermittelnden Telekommunikationsnetz die Ressourcen von verschiedenen Anwendungen beziehungsweise Teilnehmern gemeinsam genutzt werden, können diese Eigenschaften nach dem Stand der Technik in einem paketvermittelnden Telekommunikationsnetz nicht gewährleistet werden.

Der Erfindung liegt also die Aufgabe zugrunde, ein Verfahren zur Abbildung einer Eigenschaft einer permanenten Verbindung von einem verbindungsorientierten auf ein paketvermittelndes Telekommunikationsnetz anzugeben.

Dies geschieht erfindungsgemäß mit einem Verfahren der eingangs genannten Art,
- bei dem für die zweite Teilstrecke mit Hilfe des Multi Protocol Label Switching ein Label Switched Path Tunnel erzeugt wird,
- bei dem dieser Label Switched Path Tunnel entsprechend der die Verbindung betreffenden Eigenschaft auf der ersten Teilstrecke parametriert wird und
- bei dem dieser Label Switched Path Tunnel an der Schnittstelle zwischen verbindungsorientiertem und paketvermittelndem Telekommunikationsnetz mit der ersten Teilstrecke zusammengeschaltet wird.

Besonders vorteilhaft an der Erfindung ist die Verwendung des Multi Protocol Label Switching, welches durch die Internet Engineering Task Force in RFC3031 "Multiprotocol Label Switching Architecture" vom Jänner 2001 standardisiert wurde. Dieses Verfahren bietet also die Basis für die Konvergenz dieser beiden technologisch unterschiedlichen Netze unter Zuhilfenahme von standardisierten und erprobten Mitteln. Eine Kopplung dieser Netze ist daher auf besonders einfache Weise möglich. Der genannte Standard kann beispielsweise unter der Internetadresse "http://www.ietf.org" erhalten werden.

Vorteilhaft ist ein Verfahren, bei dem der Aufbau des Label Switched Path Tunnel von einer der Verbindung übergeordneten Verbindungssteuerung initiiert wird. Durch die zentrale Anordnung der Steuerung ist der Aufbau des Label Switched Path Tunnel nämlich auf vergleichsweise einfache Weise möglich.

Günstig ist es auch, wenn als Eigenschaft der Verbindung eine Qualitätsstufe, insbesondere eine garantierte Übertragungsrate und/oder eine garantierte Verfügbarkeit vorgesehen wird. Aufgrund der Reservierung einer Leitung für einen Teilnehmer kann diesem beispielsweise eine bestimmte Bandbreite in einem verbindungsorientierten Netz garantiert werden. In einem ISDN-Netz sind dies zum Beispiel 64 kBit/s. Mit Hilfe des erfindungsgemäßen Verfahrens kann diese Eigenschaft einer permanenten Verbindung auch in einem paketvermittelnden Netz gewährleistet werden.

Günstig ist es weiterhin, wenn als Eigenschaft der Verbindung eine Sicherheitsstufe und/oder eine Geheimhaltungsstufe vorgesehen wird. Diese Variante ist besonders dann vorteilhaft, wenn auf dieser Verbindung vertrauliche oder sensitive Daten übermittelt werden sollen. Mit Hilfe der Erfindung kann diese Eigenschaft durch geeignete Parametrierung vergleichsweise einfach auf einen Label Switched Path Tunnel übertragen werden.

Die Aufgabe der Erfindung wird auch mit einer Anordnung gelöst, welche zur Durchführung aller Schritte des erfindungsgemäßen Verfahrens vorbereitet ist,
- bei der an der Schnittstelle zwischen einem verbindungsorientierten Telekommunikationsnetz und einem paketvermittelten Telekommunikationsnetz ein Media Gateway angeordnet ist,
- bei der dieses Media Gateway Mittel zum Aufbau eines Label Switched Path Tunnel umfasst,
- bei der für dieses Media Gateway Mittel zur Parametrierung dieses Label Switched Path Tunnel entsprechend der die Verbindung betreffenden Eigenschaft auf der ersten Teilstrecke vorgesehen sind und
- bei der dieses Media Gateway Mittel zur Zuordnung der ersten Teilstrecke zu diesem Label Switched Path Tunnel umfasst.

Die für das Verfahren angeführten Vorteile gelten gleichermaßen auch für die erfindungsgemäße Anordnung, welche die Konvergenz von verbindungsorientierten Telekommunikationsnetzen und paketvermittelnden Telekommunikationsnetzen auf einfache Weise ermöglicht.

Vorteilhaft ist auch eine Anordnung, die eine der Verbindung übergeordnete Verbindungssteuerung zur Initiierung des Aufbaus des Label Switched Path Tunnel umfasst. Durch die zentrale Anordnung der Verbindungssteuerung ergibt sich eine einfache Möglichkeit den Label Switched Path Tunnel aufzubauen.

Die Erfindung wird anhand eines in der Figur dargestellten Ausführungsbeispiels näher erläutert, welches eine permanente Verbindung zwischen einem ersten Teilnehmer TL1 in einem verbindungsorientierten Telekommunikationsnetz TN1 und einem zweiten Teilnehmer TL2 in einem paketvermittelnden Telekommunikationsnetz TN2, sowie eine permanente Verbindung zwischen dem ersten Teilnehmer TL1 und einem dritten Teilnehmer TL3 in einem dritten, verbindungsorientierten Telekommunikationsnetz TN3 betrifft, wobei die Verbindung über das paketvermittelnde Telekommunikationsnetz TN2 geführt wird.

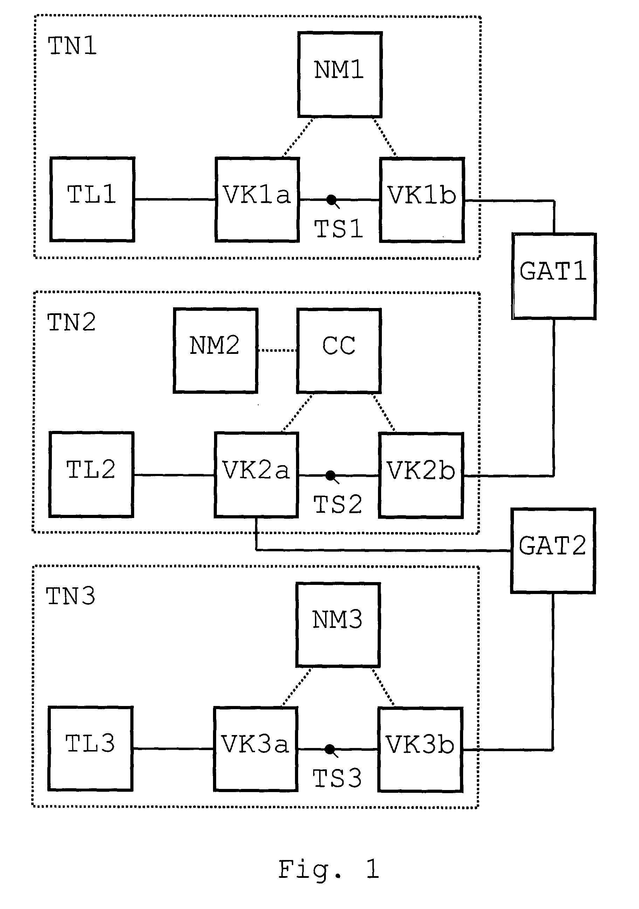

Figur 1 zeigt ein verbindungsorientiertes Telekommunikationsnetz TN1 und ein paketvermittelndes Telekommunikationsnetz TN2, wobei das verbindungsorientierte Telekommunikationsnetz TN1 einen ersten Teilnehmer TL1, einen ersten Vermittlungsknoten im verbindungsorientierten Telekommunikationsnetz VK1a und einen zweiten Vermittlungsknoten im verbindungsorientierten Telekommunikationsnetz VK1b, sowie eine erste Verwaltungseinrichtung NM1 umfasst und das paketvermittelnde Telekommunikationsnetz TN2 einen zweiten Teilnehmer TL2 einen ersten Vermittlungsknoten im paketvermittelnden Telekommunikationsnetz VK2a und einen zweiten Vermittlungsknoten im paketvermittelnden Telekommunikationsnetz VK2b, sowie eine zweite Verwaltungseinrichtung NM2 und eine Verbindungssteuerung CC umfasst.

Der erste Teilnehmer TL1 ist dabei über den ersten Vermittlungsknoten im verbindungsorientierten Telekommunikationsnetz VK1a, den zweiten Vermittlungsknoten im verbindungsorientierten Telekommunikationsnetz VK1b, ein erstes Media Gateway GAT1, den zweiten Vermittlungsknoten im paketvermittelnden Telekommunikationsnetz VK2b und den ersten Vermittlungsknoten im paketvermittelnden Telekommunikationsnetz VK2a mit dem zweiten Teilnehmer TL2 verbunden.

Die erste Verwaltungseinrichtung NM1 verwaltet den ersten und den zweiten Vermittlungsknoten im verbindungsorientierten Telekommunikationsnetz VK1a und VK1b, die Verbindungssteuerung CC steuert den ersten und den zweiten Vermittlungsknoten im paketvermittelnden Telekommunikationsnetz VK2a und VK2b, wobei an letztere überdies die zweite Verwaltungseinrichtung NM2 angeschlossen ist.

Zwischen dem ersten und dem zweiten Vermittlungsknoten im verbindungsorientierten Telekommunikationsnetz VK1a und VK1b ist eine erste Teilstrecke TS1 der permanenten Verbindung geschalten, zwischen dem ersten und dem zweiten Vermittlungsknoten im paketvermittelnden Telekommunikationsnetz VK2a und VK2b eine zweite Teilstrecke TS2.

Darüber hinaus zeigt die Figur 1 ein drittes, verbindungsorientiertes Telekommunikationsnetz TN3, welches analog zum ersten verbindungsorientierten Telekommunikationsnetz TN1 aufgebaut ist, und welches mit Hilfe eines zweiten Media Gateway GAT2 an den ersten Vermittlungsknoten im paketorientierten Telekommunikationsnetz VK2a angeschlossen ist.

Die Funktion der in der Figur 1 dargestellten Anordnung ist wie folgt:

Es wird angenommen, dass zwischen erstem und zweitem Teilnehmer TL1 und TL2 eine permanente Verbindung eingerichtet werden soll. Diese Verbindung wird also über zwei technologisch unterschiedliche Netze geführt. Erfindungsgemäß werden nun die Eigenschaften, die der ersten Teilstrecke TS1 der permanenten Verbindung eigen sind, am ersten Media Gateway GAT1 durch die Verbindungssteuerung CC derart berücksichtigt, dass im paketvermittelnden Telekommunikationsnetz TN2 ein Label Switched Path Tunnel erzeugt und entsprechend der genannten Eigenschaften auf der ersten Teilstrecke TS1 der permanenten Verbindung parametriert wird. In Folge wird die zu schaltende Verbindung über diesen Label Switched Path Tunnel zum zweiten Teilnehmer TL2 geführt. Im paketvermittelnden Telekommunikationsnetz TN2 können daher die gleichen Eigenschaften betreffend die Verbindung gewährleistet werden wie im verbindungsorientierten Telekommunikationsnetz TN1.

Als weiteres Beispiel wird angenommen, dass eine permanente Verbindung zwischen erstem und drittem Teilnehmer TL1 und TL3 eingerichtet werden soll, wobei der dritte Teilnehmer TL3 vom dritten, verbindungsorientierten Telekommunikationsnetz TN3 umfasst ist. Diese Verbindung wird also über drei technologisch unterschiedliche Netze geführt. Erfindungsgemäß werden - analog zum ersten Beispiel - die Eigenschaften, die der ersten Teilstrecke TS1 der permanenten Verbindung eigen sind, am ersten Media Gateway GAT1 durch die Verbindungssteuerung CC derart berücksichtigt, dass im paketvermittelnden Telekommunikationsnetz TN2 ein Label Switched Path Tunnel erzeugt und entsprechend der genannten Eigenschaften auf der ersten Teilstrecke TS1 der permanenten Verbindung parametriert wird.

In Folge wird die zu schaltende Verbindung über diesen Label Switched Path Tunnel zum ersten Vermittlungsknoten im zweiten Telekommunikationsnetz VK2a, dann zum zweiten Media Gateway GAT2 und schließlich zum zweiten Vermittlungsknoten im dritten Telekommunikationsnetz VK3b geführt. Im dritten, verbindungsorientierten Telekommunikationsnetz TN3 wird in Folge eine dritte Teilstrecke TS3 der permanente Verbindung zum ersten Vermittlungsknoten im dritten Telekommunikationsnetz VK3a geschalten und von dort zum dritten Teilnehmer TL3 geführt. Mit Hilfe des erfindungsgemäßen Verfahrens ist es also möglich, im paketvermittelnden Telekommunikationsnetz TN2 die gleichen Eigenschaften betreffend die Verbindung zu gewährleisten wie in den verbindungsorientierten Telekommunikationsnetzen TN1 und TN3.

Denkbar ist es auch, anstelle mehrerer getrennter Verwaltungseinrichtungen NMx oder zusätzlich zu diesen eine gemeinsame, übergeordnete Verwaltungseinrichtung zu benutzen, welche in der Lage ist, Netzelemente direkt oder indirekt zu steuern und die Errichtung und die Zusammenschaltung der verschiedenen Teilstrecken TS zu veranlassen.

Als weitere Variante ist es auch möglich, im ersten Beispiel anstelle des ersten Teilnehmers TL1 den ersten Vermittlungsknoten im ersten Telekommunikationsnetz VK1a als ersten Endpunkt der Verbindung und/oder anstelle des zweiten Teilnehmers TL2 den ersten Vermittlungsknoten im zweiten Telekommunikationsnetz VK2a als zweiten Endpunkt der Verbindung vorzusehen.

Analog dazu ist es auch denkbar, im zweiten Beispiel anstelle des ersten Teilnehmers TL1 den ersten Vermittlungsknoten im ersten Telekommunikationsnetz VK1a als ersten Endpunkt der Verbindung und/oder anstelle des dritten Teilnehmers TL3 den ersten Vermittlungsknoten im dritten Telekommunikationsnetz VK3a als zweiten Endpunkt der Verbindung vorzusehen.

## Patentansprüche

1. Verfahren zur Abbildung einer Eigenschaft, welche eine erste Teilstrecke TS1 einer permanenten Verbindung betrifft, auf eine zweite Teilstrecke TS2 dieser Verbindung, wobei die erste Teilstrecke TS1 über ein verbindungsorientiertes Telekommunikationsnetz TN1 und die zweite Teilstrecke TS2 über ein paketvermittelndes Telekommunikationsnetz TN2 geführt wird,
**dadurch gekennzeichnet,**
- **dass** für die zweite Teilstrecke TS2 mit Hilfe des Multi Protocol Label Switching ein Label Switched Path Tunnel erzeugt wird,
- **dass** dieser Label Switched Path Tunnel entsprechend der die Verbindung betreffenden Eigenschaft auf der ersten Teilstrecke TS1 parametriert wird und
- **dass** dieser Label Switched Path Tunnel an der Schnittstelle zwischen verbindungsorientiertem und paketvermittelndem Telekommunikationsnetz TN1 und TN2 mit der ersten Teilstrecke TS1 zusammengeschaltet wird.

2. Verfahren nach Anspruch 1, **dadurch gekennzeichnet, dass** der Aufbau des Label Switched Path Tunnel von einer der Verbindung übergeordneten Verbindungssteuerung CC initiiert wird.

3. Verfahren nach einem der Ansprüche 1 bis 2, **dadurch gekennzeichnet, dass** als Eigenschaft der Verbindung eine Qualitätsstufe, insbesondere eine garantierte Übertragungsrate und/oder eine garantierte Verfügbarkeit vorgesehen wird.

4. Verfahren nach einem der Ansprüche 1 bis 2, **dadurch gekennzeichnet, dass** als Eigenschaft der Verbindung eine Sicherheitsstufe und/oder eine Geheimhaltungsstufe vorgesehen wird.

5. Anordnung, welche zur Durchführung aller Schritte eines Verfahrens nach einem der Ansprüche 1 bis 4 vorbereitet ist, **dadurch gekennzeichnet,**
- **dass** an der Schnittstelle zwischen einem verbindungsorientierten Telekommunikationsnetz TN1 und einem paketvermittelten Telekommunikationsnetz TN2 ein erstes Media Gateway GAT1 angeordnet ist,
- **dass** dieses erste Media Gateway GAT1 Mittel zum Aufbau eines Label Switched Path Tunnel umfasst,
- **dass** für dieses erste Media Gateway GAT1 Mittel zur Parametrierung dieses Label Switched Path Tunnel entsprechend der die Verbindung betreffenden Eigenschaft auf der ersten Teilstrecke TS1 vorgesehen sind und
- **dass** dieses erste Media Gateway GAT1 Mittel zur Zuordnung der ersten Teilstrecke TS1 zu diesem Label Switched Path Tunnel umfasst.

6. Anordnung nach Anspruch 5, **dadurch gekennzeichnet, dass** diese eine der Verbindung übergeordnete Verbindungssteuerung CC zur Initiierung des Aufbaus des Label Switched Path Tunnel umfasst.
